# EUROPEAN PATENT APPLICATION

(11) **EP 3 276 568 A1**
(43) Date of publication of application: **31.01.2018**
(21) Application number: 17001298.3
(22) Date of filing: 28.07.2017
(51) Int. Cl.: G06Q 50/08, B23K 9/095

(54) **PRODUCTION MANAGER WITH LOCATION AND INSPECTION DATA**

(30) Priority: 29.07.2016 US 201615224221
(71) Applicant: Lincoln Global, Inc., Santa Fe Springs, CA 90670 (US)
(72) Inventor: Enyedy, Edward A., Eastlake, OH 44095 (US); Kooken, Todd Eric, Solon, OH 44319 (US)
(74) Representative: Grosse Schumacher Knauer von Hirschhausen

(57) **Abstract**

A production monitoring system (100) has a production monitoring server (120), a network communication system, production monitoring data store (130), and production monitoring module (135). The system (100) is configured to receive, from multiple construction locations, information relating to weld locations, welding parameters, and inspection status for individual welds. Welding information is stored within data stores (130) and is retrieved on request to generate inspection reports containing weld locations, welding parameters, and inspection status for individual welds. Inspection reports can be delivered remotely to a plurality of electronic devices (150) and may contain data from x-ray or ultrasound weld inspections. Weld location may be generated by GPS or by one or more location sensors. The system (100) can receive updated inspection information and update the corresponding information in the data store (130). Inspection reports can incorporate welding information within a two-dimensional map or three-dimensional model of a construction location.

## Description

### FIELD OF THE INVENTION

The invention is related to a method of monitoring weldment location and inspection data according to claim 1, and to a production monitoring system according to claim 7. The present disclosure relates to production monitoring systems for monitoring weldment locations and inspection information and for generating inspection reports accessible to a wide variety of user devices.

### TECHNICAL BACKGROUND

Fabrication shops have become increasingly vigilant about keeping costs under control while striving to reach higher levels of productivity and quality in all aspects of the production cycle, including welding operations. Any welding process improvement demands the ability to benchmark and measure successes. Automation and other methods exist that streamline the actual process of welding, however tools that allow evaluation and analysis of productivity and throughput can also immensely impact a company's finances.

The welding industry has access to monitoring tools that enable any networked welding power source to transmit its own weld performance data. These systems can track metrics and provide analysis down to the level of a single weld performed by a particular operator on a specific welder during a certain shift, so as to establish productivity benchmarks, support, troubleshooting capability, and more.

Welding shops sought a method for simple data collection that would give them a detailed view into the production environment, providing such features as production and productivity metrics, weld record archives, welding procedure limits, downtime analysis, traceability, and even email alerts. Production monitoring allows users at any level of an organization to view pertinent live information about each welder and analyze performance at a highly granular level. These systems also help organizations track preventative maintenance activities and red flag welding related issues on any station in the production line, allowing engineers to prevent problems before they occur.

Early systems required local installation of a data collection utility on multiple desktop computers, all of which had to be linked to the welders at the facility. The staff then had to learn the new software in order to keep equipment running. This software also routinely had to be maintained and upgraded on each particular desktop computer tied into the welders.

### DESCRIPTION

In order to improve monitoring of tools, a method of monitoring weldment location and inspection data according to claim 1 is described, and a production monitoring system according to claim 7. Preferred embodiments are subject the subclaims.

The method of monitoring weldment location and inspection data is configured to receive at a production monitoring server first weldment information comprising, for individual weld locations, welding parameters, inspection status, and weld location, the weldment information generated at a first construction location. According to the method receiving at a production monitoring server second weldment information is provided, the information comprising, for individual weld locations, welding parameters, inspection status, and weld location, the weldment information generated at a second construction location. According to the method storing the first weldment information and the second weldment information in a production monitoring data store on the production monitoring server is provided, the production monitoring data store accessible to a plurality of remote electronic devices. According to the method receiving a request for an inspection report for the first construction location or the second construction location is provided. According to the method generating the inspection report by retrieving from the production monitoring data store the weldment information corresponding to the request is provided, the inspection report comprising, for individual weld locations, the inspection status and the weld location. According to the method receiving for at least one weld location in the inspection report updated inspection information is provided. According to the method updating the corresponding weldment information in the production monitoring data store. The production monitoring system according to the invention comprises a production monitoring server and a network communication system on the production monitoring server, the network communication system configured to communicate over a network to a plurality of remote electronic devices.

The system also comprises a production monitoring data store on the production monitoring server, the production monitoring data store configured to store weldment information generated at a plurality of construction locations, the weldment information comprising, for individual weld locations at a particular construction location, welding parameters, inspection status, and weld location.

The system comprises a production monitoring module on the production monitoring server, the production monitoring module configured to execute instructions using a hardware processor. The instructions comprise receiving a request for an inspection report for an individual construction location and generating the inspection report by retrieving from the production monitoring data store the weldment information corresponding to the request, the inspection report comprising, for individual weld locations, the inspection status and the weld location. The instruction also comprise receiving for at least one weld location in the inspection report updated inspection information and updating the corresponding weldment information in the production monitoring data store.

### BRIEF DESCRIPTION OF THE DRAWING

FIG. 1 illustrates a block diagram of an example production monitoring system.
FIG. 2A illustrates a flow chart of an example process.
FIG. 2B illustrates a flow chart of an example process of generating an inspection report.

### DETAILED DESCRIPTION

In many applications, items such as pipelines, bridges, buildings, and ships, are welded on site and never move. These joints may be held to high quality standards and require inspection after welding. Structures such as these may have hundreds or thousands of welds. In some construction locations, such as large, multi-story buildings or other large scale projects, it is not practically feasible to connect all the welders to production monitoring computers, maintain monitoring software, and keep production monitoring data on-site.

While current systems are able to track data from the welding process, such systems have not been able to integrate the monitoring of efficiently monitoring weldment locations and inspection data and provide power analytical tools to users at all levels of an organization.

Various embodiments of the present disclosure provide a method of monitoring weldment location and inspection data. The method may include receiving at a production monitoring server weldment information from at least a first and second construction location. The weldment information may include, but is not limited to, weld location, welding parameters, and/or inspection status for individual weld locations. The method may include storing the first and second weldment information in a production monitoring data store on the production monitoring server. In some embodiments, the production monitoring data store is accessible to multiple remote electronic devices. The method may include receiving a request for an inspection report for the first or the second construction location. The method may further include generating the inspection report by retrieving the weldment information corresponding to the request from the production monitoring data store, wherein the inspection report may include the inspection status, weld location, and/or welding parameters for individual weld locations. The method may further include receiving updated inspection information for at least one weld location in the inspection report and updating the corresponding weldment information in the production monitoring data store.

In some embodiments of the present disclosure, the weld location information may be generated using a global positioning system (GPS). In some embodiments, the weld location information may also be generated using one or more sensors located on the welder, the operator, or a handheld device. In some embodiments, the inspection information may comprise one or a combination of information generated from an x-ray device, an ultrasound device, a visual inspection, a liquid penetrant inspection, and/or a magnetic particle inspection. In some embodiments, the method may further include generating a two-dimensional map or three-dimensional model with the weldment information corresponding to the request, wherein the map or model includes the locations of individual welds included in the weldment information.

Various embodiments of the present disclosure provide a production monitoring system having a production monitoring server, a network communication system on the production monitoring server which is configured to communicate over a network to a number of remote electronic devices, a production monitoring data store on the production monitoring server which is configured to store weldment information generated at a number of construction locations, and a production monitoring module on the production monitoring server which is configured to execute instructions using a hardware processor. In some embodiments, the weldment information includes, but is not limited to, welding parameters, inspection status, and weld location for particular construction locations.

In some embodiments, the instructions executable by the production monitoring module include receiving a request for an inspection report for an individual construction location, generating the inspection report by retrieving the weldment information corresponding to the request from the production monitoring data store, receiving updated inspection information for at least one weld location in the inspection report, and updating the corresponding weldment information in the production monitoring store. In some embodiments, the inspection report may include, but is not limited to, inspection status, weldment parameters for individual weld locations. In some embodiments, the instructions executable by the production monitoring module further include generating a two-dimensional map or three-dimensional model of the corresponding construction location with the weldment information corresponding to the request, wherein the map includes the locations of individual welds included in the weldment information. In some embodiments, the instructions executable by the production monitoring module also include receiving weld locations from a computer automated file or a surveying file, and updating the corresponding weldment location in the production monitoring data store with the received weld locations. In some embodiments, the weld location information is generated at the corresponding construction site using a global positioning system. In some embodiments, the weld location information may also be generated by welding equipment having one or more sensors configured to determine a location of the welding equipment when the weld is made. The weld location information generated by the welding equipment may further be automatically transmitted to the production monitoring server. In some embodiments, at least a portion of the inspection information may be generated by an x-ray device or an ultrasound device. Further, in some embodiments, the information generated by an x-ray device or an ultrasound device may be automatically transmitted to the production monitoring server.

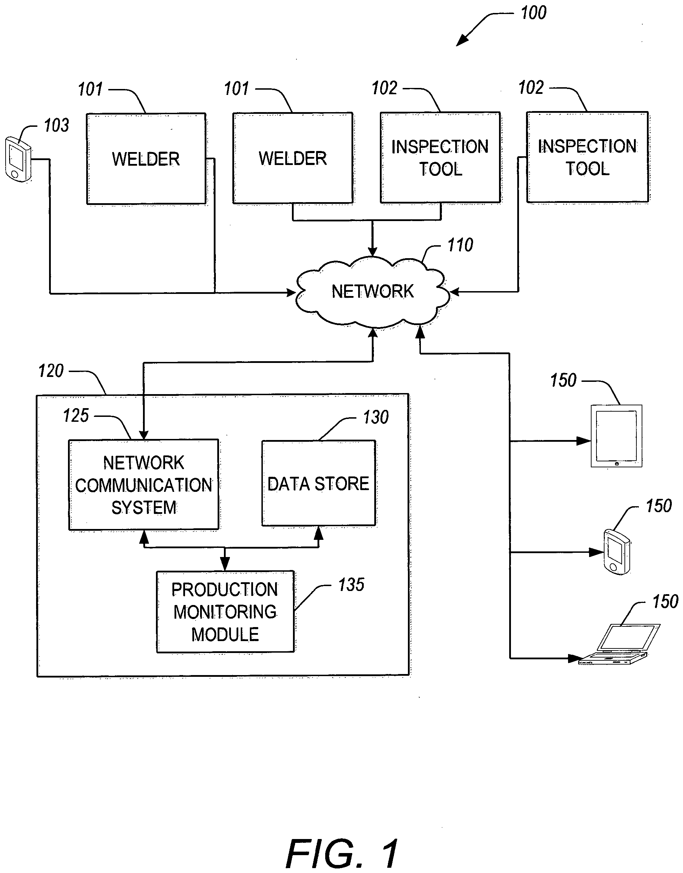

FIG. 1 provides a block diagram illustrating an example embodiment of a production monitoring system. System 100 includes a production monitoring server 120 that has a network communication system 125, a data store 130, and a production monitoring module 135. System 100 also includes welders 101 and inspection tools 102 which may wirelessly access a network 110. System 100 also includes user devices 150 such as a tablet, phone, or personal computer which can access network 110. Network communication system 125 may be a LAN or a Wireless LAN adapter or other network adapter for transmitting and receiving data between electronic devices. Data store 130 may be one or more hard drives, solid state drives, flash memory, or other types of non-volatile or volatile memory. In some embodiments, information may be transmitted directly between user devices 150 and the production monitoring server 120 via wired connections such as USB or other proprietary or non-proprietary connections. Information may also be transmitted wirelessly between user devices 150 and the production monitoring server 120 via Bluetooth or infrared signals or other wireless data transmission techniques known in the art.

Welders 101 may be manual, semiautomatic, or automatic welders. These welders may also be stationary welders, or they may be portable welders. In some embodiments, the welders may be configured with appropriate sensors and equipment to record, store, and transmit weldment location and weldment parameters such as voltage, amperage, timestamp, welding machine serial number and/or name, operating software information, data logs, welding wire used and/or remaining. Weldment location information can be generated by a variety of methods. For example, in some embodiments, a handheld device 103 containing a location sensor can be used by an operator to confirm completion of the weld. The handheld device 103 would record the coordinates of the device 103 when a button is pressed. In some embodiments, a user may input the coordinates of a weldment location into the handheld device 103 during or after completion of the weld. In some embodiments, a GPS module may be built into a welder 101. The GPS sensor may be built into a power source, such as a welding generator, a wire feeder, welding gun, welding helmet, fume extractor, or protective clothing. In some embodiments, location sensors may be separate from the welders and placed on-site to monitor weldment locations. Still in some embodiments, weldment location can be input manually by the user to either the welder 101 or to a separate user device that transmits weldment location to the production monitoring server 120. Weldment location may be generated in real-time as a weld is being made, or generated before a weld is made, or after a weld is made. It is to be understood that the various methods of generating weldment location are not mutually exclusive and that in some embodiments, weldment location may be generated by one or a combination of a handheld user device, GPS module, location sensors, and/or user input.

After a weld is made, weldment location information and weldment parameters are transmitted via network 110 to the network communication system 125 within production monitoring server 120. Welders 101 or handheld devices 103 may be connected to network 110 wirelessly or via wired connections. Weldment location information and weldment parameters are then received by the network communication system 125 and stored in the data store 130. In some embodiments, welders 101 or handheld devices 103 may be connected directly to the production monitoring server 120 without going through network 110.

Inspection tools 102 are capable of wirelessly accessing network 110. In some embodiments, inspection tools 102 can be connected to network 110 via wired connections. Inspection tools 102 include x-ray devices, such as radiographic inspection machines, and/or ultrasound inspection machines. Inspection tools 102 may also include devices for performing and/or recording the results of visual inspections, magnetic particle inspections, and or liquid penetrant inspections. Inspection tools 102 record the results of a weld inspection and the location of the weld inspection and transmit the results via network 110 to the network communication system 125 within production monitoring server 120. In some embodiments, the inspection tools 102 may perform the recording and/or transmitting of results automatically. Once inspection data is received by the network communications system, the inspection data is then stored in the data store 130.

Production monitoring module 135 may be configured to execute instructions using a hardware processor. Production monitoring module 135 may be configured to access the data store 130 and retrieve weldment location information, weldment parameters, and inspection data from the data store 130. Production monitoring module 135 may further be configured to generate a two-dimensional map or three-dimensional model based on the locations of individual welds obtained from the weldment location stored in data store 130. In some embodiments, the map or model may be generated by the production monitoring module 135 based solely on the weldment location information. In some embodiments, the map or model can be user inputted, such as through a computer automated file or a surveying file. Based on the user inputted map or model, production monitoring module 135 can incorporate weldment location, weldment parameter information, and inspection data into the map or model. In some embodiments, weldment location, weldment parameter information, and inspection data can be incorporated into the map or model as buttons, dialog boxes, or other virtual objects placed within the map or model corresponding to the actual weld locations. A user can then access and view data for a particular weld location by clicking, hovering over, or otherwise actuating the button or virtual object. In some embodiments, weldment location, weldment parameter information, and inspection data may appear within the map or model as color coded regions such that a user can quickly determine which weldment locations have been completed, which weldment locations need inspection, and which weldment locations passed inspection at a glance. Still in some embodiments, the map or model may display information relating to weldment location, weldment parameters, and inspection data using one or a combination of the techniques just described.

User devices 150 can be configured with a user interface to interact with the production monitoring server 120. In some embodiments, because user devices 150 may interact remotely with the production monitoring server 120 to retrieve information stored on the production monitoring server, these embodiments may appears as "cloud"-based production monitoring. A user may request an inspection report for a project, work site, or construction location via a user device 150. User device 150 can then be configured to generate a request, transmit the request via network 110 to the network communication system 125, where the request will then be interpreted by the production monitoring module 135. Production monitoring module 135, in response to the request, can generate the inspection report by retrieving weldment location information, weldment parameter information, and inspection data corresponding to the request. If the user requests a map or model, the production monitoring module 135 may also be configured to generate a two-dimensional map or three-dimensional model based on the weldment location data and/or a user-inputted map or model, and incorporate the weldment location information, weldment parameter information, and inspection data into the map or model. In some embodiments, the user device 150 may display the two-dimensional map or three-dimensional model and incorporate buttons, dialog boxes, or other virtual boxes placed within the map or model for presenting information relating to weldment location, weldment parameters, and inspection data.

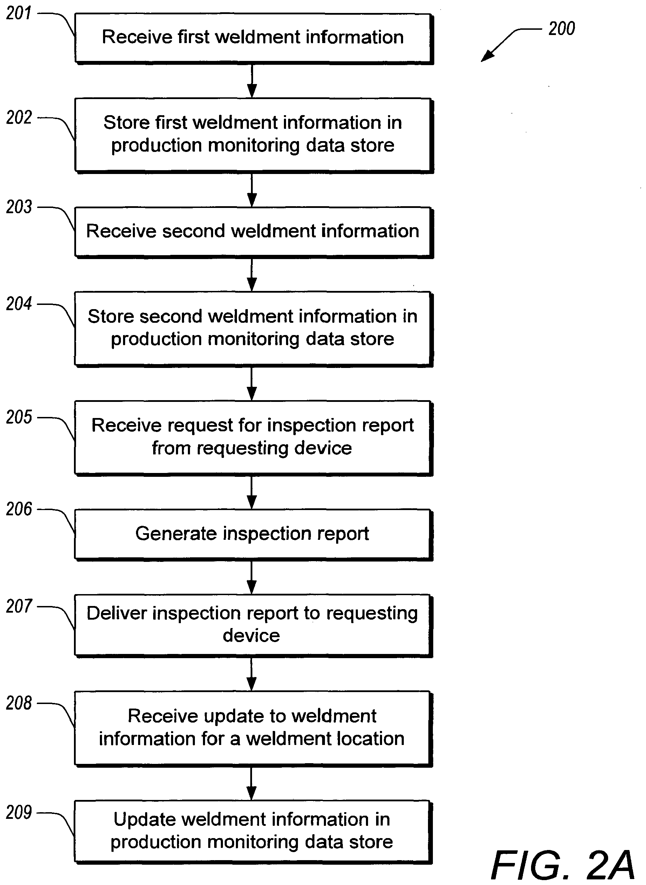

FIG. 2A is a flow chart of a process 200 that may be performed by a production monitoring server. The process starts at step 201 where the production monitoring server receives weldment information from a first welding location. During and after a weld is made, a welder with appropriate sensors may detect and record welding parameters such as voltage, current, and a timestamp. A location sensor located on the welder or the operator or as a separate handheld device can detect and record the location of the newly made weld. Other information pertaining to welding machine serial number, machine name, operator ID, software information, and/or data logs can also be recorded by the welder and/or a separate recording device. The welder and/or separate recording device automatically or upon user-request, transmits the weldment location information, weldment parameters such as voltage, current, time, machine serial number, machine name, operator ID, software version information, data logs, and other information to the production monitoring server. The transmission of data may occur wirelessly or through wires. In some embodiments, information may be transmitted first through a network such as the Internet or intranet to a network communications system within the production monitoring server. In some embodiments, information may be transmitted directly between the welder and/or separate recording device and the production monitoring server, such as through a USB cable or Bluetooth or other known methods of transmitting data.

If an inspection is performed on the first weldment location, data corresponding to the inspection status may also be transmitted to the production monitoring server in step 201. Inspection tools may perform and/or record the results of visual inspections, magnetic particle inspections, liquid penetrant inspections, radiographic inspections, and/or ultrasound inspections.

In step 202, the production monitoring server processes the weldment location information and weldment parameter information from a first weldment location and stores the information within a production monitoring data store.

In step 203, the production monitoring server receives weldment information from a second welding location. During and after a second weld is made, a welder with appropriate sensors may detect and record welding parameters such as voltage, current, and a timestamp. A location sensor located on the welder or the operator or as a separate handheld device can detect and record the location of the newly made second weld. Other information pertaining to welding machine serial number, machine name, operator ID, software information, and/or data logs can also be recorded by the welder and/or a separate recording device. The welder and/or separate recording device automatically or upon user-request, transmits the weldment location information, weldment parameters such as voltage, current, time, machine serial number, machine name, operator ID, software version information, data logs, and other information to the production monitoring server. The transmission of data may occur wirelessly or through wires. In some embodiments, information may be transmitted first through a network such as the Internet or intranet to a network communications system within the production monitoring server. In some embodiments, information may be transmitted directly between the welder and/or separate recording device and the production monitoring server, such as through a USB cable or Bluetooth or other known methods of transmitting data.

In step 204, the production monitoring server processes the weldment location information and weldment parameter information from the second weldment location and stores the information within a production monitoring data store.

In step 205, the production monitoring server receives a request for an inspection report from a requesting device such as user devices including tablets, phones, and personal computers. A user device may include a graphical user interface which the user interacts with to generate an inspection report. In some embodiments, the user may specify via the graphical user interface which weld locations are to be included with an inspection report. In some embodiments, the user may also specify what types of data to include with an inspection report, such as weldment location info, weldment parameters, and inspection status. The user device may then transmit a signal requesting an inspection report via an internet or intranet network to a network communication system within the production monitoring server. In some embodiments, the user device may transmit a signal requesting an inspection report directly to the production monitoring server such as through a USB cable, Bluetooth, or other known methods of transmitting data.

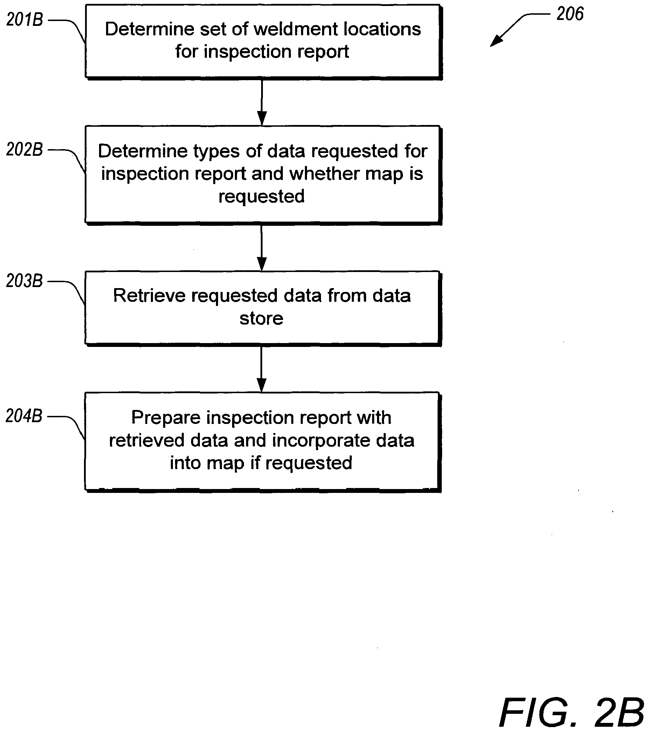

In step 206, the production monitoring server processes the received request for an inspection report and generates an inspection report. The process of generating an inspection report will be explained in greater detail with respect to FIG. 2B.

In step 207, the production monitoring server delivers the inspection report to the requesting device. In some embodiments, the production monitoring server may deliver the inspection report via an internet or intranet network to the requesting device. In some embodiments, the production monitoring server may deliver the inspection report directly to the requesting device via a USB cable or Bluetooth or other known method of transmitting data.

In step 208, the production monitoring server receives an update to weldment information for a weldment location. An update may be transmitted by a user device, welder, or inspection tool. In some embodiments, an update may contain weldment location information and weldment parameters for a newly-made weld. In some embodiments, an update may contain an inspection status generated during or after an inspection is performed on an existing weld. In some embodiments, an update may contain a combination of weldment location information, weldment parameters, and/or inspection status. Still in some embodiments, an update may include updated weldment location information, weldment parameters, and/or inspection status intended to replace outdated or erroneously recorded data.

In step 209, the production monitoring server processes the received update to weldment information and updates the weldment information in the data store accordingly.

In some embodiments, the process 200 may occur continuously in real time. For example, in some embodiments, a user may request a live inspection report which continually polls the production monitoring server for updated inspection reports at regular, closely placed intervals. The regular intervals may be short, on the order of milliseconds, or long, on the order of seconds, minutes, or hours. In some embodiments, the production monitoring server receives or polls welders or handheld devices or inspection tools for weldment information, weldment parameters, and inspection status at regular intervals. In some embodiments, the map or model delivered to the requesting device in step 207 may be continually updated and redelivered at regular intervals without further user interaction.

FIG. 2B is a flow chart of a process 206 of generating an inspection report. After step 205 in FIG. 2A, a production monitoring module processes the received request for an inspection report. In step 201 B, the production monitoring module determines the set of weldment locations to be included in an inspection report. Based on the user request, the set of weldment locations may be every weldment location for a particular project or work site, or it may be some subset of all the weldment locations that the user defines. For example, in some applications, a user may wish to receive an inspection report covering only the welds that have already been finished and inspected. In other applications, a user may wish to receive an inspection report for every weld that has been finished, regardless of whether it has been inspected. Still in other applications, a user may wish to manually select certain welds for an inspection report.

In step 202B, the production monitoring module determines the types of data requested for an inspection report. A user may specify via a graphical user interface on a user device the types of data to be included. For example, a user may specify all or a subset of location information, weldment parameter information such as voltage, current, timestamp, machine serial number, machine name, operator ID, software information, and/or other data logs, and inspection status such as whether an inspection was performed, the type of inspection, and results of the inspection. In step 202B, the production monitoring module may also determine whether the user requested a two-dimensional map or three-dimensional model for inclusion with the inspection report.

In step 203B, the production monitoring module retrieves the requested data for the requested weldment locations from the data store.

In step 204B, the production monitoring module prepares the inspection report with the retrieved data for the requested weldment locations. If a two-dimensional map or three-dimensional model is requested by the user, the production monitoring module also prepares a map or model and incorporates the retrieved data within the two-dimensional map or three-dimensional model. In some embodiments, the map or model may be generated by the production monitoring module based solely on the weldment location information from all or some of the weldment locations. In some embodiments, the map or model may be user inputted, such as via a computer automated file or a surveying file. In some embodiments, the retrieved data may be incorporated into the map or model as buttons, dialog boxes, or other virtual objects placed within the map or model corresponding to the actual weld locations. In some embodiments, the retrieved data may be incorporated into the map or model as color coded regions representative of the retrieved data. After step 204B, the production monitoring server proceeds to step 207 in FIG. 2A, as described above.

### Other Variations

Those skilled in the art will appreciate that in some embodiments additional system components can be utilized, and disclosed system components can be combined or omitted. The actual steps taken in the disclosed processes, such as the processes illustrated in FIGS. 2A and 2B, may differ from those shown in the figures. Depending on the embodiment, certain of the steps described may be removed, others may be added. Accordingly, the scope of the present disclosure is intended to be defined only be reference to the appended claims.

While certain embodiments have been described, these embodiments have been presented by way of example only, and are not intended to limit the scope of the protection. Indeed, the novel methods and systems described herein may be embodied in a variety of other forms. Furthermore, various omissions, substitutions and changes in the form of the methods and systems described herein may be made without departing from the spirit of the protection. The accompanying claims and their equivalents are intended to cover such forms or modifications as would fall within the scope and spirit of the protection. For example, the systems and methods disclosed herein can be applied to welders. However, the systems and methods disclosed herein for monitoring production and inspection can also be applied to other machining tools and processes such as soldering, brazing, riveting, and the like. Also, the features and attributes of the specific embodiments disclosed above may be combined in different ways to form additional embodiments, all of which fall within the scope of the present disclosure.

The terminology used herein is for the purpose of describing particular embodiments only and is not intended to be limiting of this disclosure. As used herein, the singular forms "a," "an" and "the" are intended to include the plural forms as well, unless the context clearly indicates otherwise. It will further be understood that the terms "comprises" and/or "comprising," when used in this specification and in the claims, specify the presence of stated features or processes but do not preclude the presence or addition of one or more other features or processes. Further, references to "a method" or "an embodiment" throughout are not intended to mean the same method of same embodiment, unless the context clearly indicates otherwise.

The corresponding structures, materials, acts, and equivalents of all means or step plus function elements in the claims below are intended to include any structure, material, or act for performing the function in combination with other claimed elements as specifically claimed. The description of the various embodiments of the present invention has been presented for purposes of illustration and description, but is not intended to be exhaustive or limited to the embodiments disclosed. Many modifications and variations will be apparent to those of ordinary skill in the art without departing from the scope and spirit of this disclosure. The example embodiments were chosen and described in order to best explain the principles of this disclosure and the practical application, and to enable others of ordinary skill in the art to understand this disclosure for various embodiments with various modifications as are suited to the particular use contemplated.

Although the present disclosure provides certain preferred embodiments and applications, other embodiments that are apparent to those of ordinary skill in the art, including embodiments which do not provide all of the features and advantages set forth herein, are also within the scope of this disclosure. Accordingly, the scope of the present disclosure is intended to be defined only by reference to the appended claims.

**REFERENCE NUMBERS**

| | | | |
|---|---|---|---|
| 100 | system | 202 | step |
| 101 | welder | 202B | step |
| 102 | tool | 203 | step |
| 103 | device | 203B | step |
| 110 | network | 204 | step |
| 120 | server | 204B | step |
| 125 | system | 205 | step |
| 130 | data store | 206 | step |
| 135 | module | 207 | step |
| 150 | user device | 208 | step |
| 200 | process | 209 | step |
| 201 | step | | |
| 201B | step | | |

## Claims

1. A method of monitoring weldment location and inspection data, the method comprising:
receiving at a production monitoring server first weldment information comprising, for individual weld locations, welding parameters, inspection status, and weld location, the weldment information generated at a first construction location;
receiving at a production monitoring server second weldment information comprising, for individual weld locations, welding parameters, inspection status, and weld location, the weldment information generated at a second construction location;
storing the first weldment information and the second weldment information in a production monitoring data store on the production monitoring server, the production monitoring data store accessible to a plurality of remote electronic devices;
receiving a request for an inspection report for the first construction location or the second construction location;
generating the inspection report by retrieving from the production monitoring data store the weldment information corresponding to the request, the inspection report comprising, for individual weld locations, the inspection status and the weld location;
receiving for at least one weld location in the inspection report updated inspection information; and
updating the corresponding weldment information in the production monitoring data store.

2. The method of Claim 1, wherein the weld location is generated using a global positioning system.

3. The method of Claim 1 or 2, wherein the weld location is generated by welding equipment that includes one or more sensors to determine the weld location.

4. The method of any of the claims 1 to 3, wherein the inspection information comprises information generated using an x-ray device.

5. The method of any of the claims 1 to 4, wherein the inspection information comprises information generated using an ultrasound device.

6. The method of any of the claims 1 to 5, further comprising generating a map with the weldment information corresponding to the request, the map including the locations of individual welds included in the weldment information, wherein the map preferably is a three dimensional model of the corresponding construction location.

7. A production monitoring system (100) comprising:
a production monitoring server (120);
a network communication system (125) on the production monitoring server (120), the network communication system (125) configured to communicate over a network to a plurality of remote electronic devices;
a production monitoring data store (130) on the production monitoring server (120), the production monitoring data store (130) configured to store weldment information generated at a plurality of construction locations, the weldment information comprising, for individual weld locations at a particular construction location, welding parameters, inspection status, and weld location; and
a production monitoring module (135) on the production monitoring server (120), the production monitoring module (135) configured to execute instructions using a hardware processor, the instructions comprising:
receiving a request for an inspection report for an individual construction location;
generating the inspection report by retrieving from the production monitoring data store the weldment information corresponding to the request, the inspection report comprising, for individual weld locations, the inspection status and the weld location;
receiving for at least one weld location in the inspection report updated inspection information; and
updating the corresponding weldment information in the production monitoring data store (130).

8. The system (100) of Claim 7, wherein the instructions executed by production monitoring module further include generating a map with the weldment information corresponding to the request, the map including the locations of individual welds included in the weldment information, wherein the map preferably is a three dimensional model of the corresponding construction location.

9. The system (100) of Claim 7 or 8, wherein the instructions executed by production monitoring module (135) further include:
receiving weld locations from a computer automated file or a surveying file; and
updating the corresponding weldment information in the production monitoring data store (130) with the received weld locations.

10. The system (100) of any of the claims 7 to 9, wherein the weld location information is generated at the corresponding construction site using a global positioning system of an electronic device.

11. The system (100) of any of the claims 7 to 10, wherein the weld location information is generated by welding equipment at the corresponding construction site, the welding equipment comprising one or more sensors configured to determine a location of the welding equipment at a time when the weld is made.

12. The system (100) of any of the claims 7 to 11, wherein the weld location information generated by the welding equipment is automatically transmitted to the production monitoring server (120).

13. The system (100) of any of the claims 7 to 12, wherein at least a portion of the inspection information is generated by an x-ray device or an ultrasound device.

14. The system (100) of any of the claims 7 to 13, wherein at least a portion of the inspection information is automatically generated by the x-ray device or the ultrasound device and transmitted to the production monitoring server (120).
